# EUROPEAN PATENT APPLICATION

(11) **EP 4 601 262 A1**
(43) Date of publication of application: **13.08.2025**
(21) Application number: 24791772.7
(22) Date of filing: 12.03.2024
(51) Int. Cl.: H04L 67/10

(54) **DISTRIBUTED SYSTEM AND TRANSMISSION SCHEDULING METHOD**

(30) Priority: 20.04.2023 CN 202310439284
(71) Applicant: Tencent Technology (Shenzhen) Company Limited, Shenzhen, Guangdong 518057 (CN)
(72) Inventor: LV, Jianchao, Shenzhen, Guangdong 518057 (CN); WANG, Jinglin, Shenzhen, Guangdong 518057 (CN); TAN, Zhi, Shenzhen, Guangdong 518057 (CN); BAO, Mingxian, Shenzhen, Guangdong 518057 (CN); HOU, Zhichao, Shenzhen, Guangdong 518057 (CN); HU, Da, Shenzhen, Guangdong 518057 (CN)
(74) Representative: Reddie & Grose LLP
(86) International application number: PCT/CN2024/081138
(87) International publication number: WO 2024/217184

(57) **Abstract**

Provided in the embodiments of the present application are a distributed system and a transmission scheduling method. The distributed system is applied to a cloud network, wherein the architecture of the cloud network comprises an access network, a backbone network, and a data center network. The distributed system comprises a first routing node device, a second routing node device, and a global routing service node device, wherein each node device is connected to the backbone network; the first routing node device is arranged in the access network and comprises a general-purpose service component and a first general purpose switching component; the second routing node device is arranged in the data center network and comprises a second general-purpose switching component; the global routing service node device is independent of the access network and the data center network; and a mapping relationship between a peer-to-peer connection and a scheduling identifier is transmitted between the node devices, and the node devices perform transmission scheduling on a service message in the cloud network on the basis of the mapping relationship. By means of the embodiments of the present application, a commercial router can be decoupled and the embodiments of the present application can be applied to a cloud network, thereby meeting the transmission scheduling requirements of the cloud network.

## Description

This application claims priority to Chinese Patent Application No. 202310439284.3, filed with the Chinese National Intellectual Property Administration on April 20, 2023, and entitled "DISTRIBUTED SYSTEM AND TRANSMISSION SCHEDULING METHOD".

### FIELD OF THE TECHNOLOGY

The present disclosure relates to the field of Internet technologies, and specifically, to a distributed system and a transmission scheduling method.

### BACKGROUND OF THE DISCLOSURE

At present, a network device, such as a commercial edge router (ER), may be deployed on a border of an internet service provider (ISP) network, and a network device, such as a commercial internal router (IR), is deployed inside a data center network. Through the foregoing deployment, interconnection between the data center network and the ISP network can be achieved, thereby providing internet services for massive objects. Because the Internet routing information is huge in amount (generally in million-level), the range of choosing commercial routers is narrow. Due to features such as being expensive, poor function scalability, slow iteration speed, and high operation costs, an actual requirement of a cloud scenario cannot be satisfied.

### SUMMARY

Embodiments of the present disclosure provide a distributed system and a transmission scheduling method. A commercial router may be decoupled and used in a cloud network, to satisfy a transmission scheduling requirement of the cloud network.

According to an aspect, an embodiment of the present disclosure provides a distributed system. The distributed system is applied to a cloud network. The cloud network comprises an access network, a backbone network, and a data center network. Node devices of the distributed system comprise one or more first routing node devices, one or more second routing node devices, and a routing-service node device. The one or more first routing node devices, the one or more second routing node devices, and the routing-service node device are connected to the backbone network.

The one or more first routing node devices are deployed within the access network and are configured to access one or more internet service provider networks, and each first routing node device comprises a service component and a first switch component. The one or more second routing node devices are deployed in the data center network and are configured to provide data interconnection among one or more sub-networks in the data center network, the second routing node device comprises a second switch component. The routing-service node device is deployed outside of the access network and the data center network.

A mapping relationship between peer connections and scheduling labels is maintained in the distributed system, the mapping relationship is shared among the node devices of the distributed system, and the node devices in the distributed system are configured to schedule transmission of service packets in the cloud network according to the mapping relationship.

According to an aspect, an embodiment of the present disclosure provides a transmission scheduling method. The transmission scheduling method is applied to the foregoing distributed system; and the method comprises: obtaining the mapping relationship between the peer connections and the scheduling labels; sharing the mapping relationship among the node devices of the distributed system; and scheduling the transmission of the service packets in the cloud network according to the mapping relationship.

The distributed system in this embodiment of the present disclosure comprises the first routing node device, the second routing node device, and the routing-service node device. The first routing node device comprises the service component and the first switch component, and the second routing node device comprises second switch component. Herein a low-price component is utilized to replace commercial router, so that a large-scale commercial router can be decoupled, operation can be greatly simplified, and operation costs can be reduced, thereby improving scalability and flexibility of the distributed system. In addition, the distributed system may be applied to the cloud network. The cloud network comprises the access network, the backbone network, and the data center network. The first routing node device, the second routing node device, and the routing-service node device are all connected to the backbone network. Hence, the access network and the backbone network may be interconnected through the first routing node device, and the data center network and the backbone network may be interconnected through the second routing node device. The cloud network is opened through the distributed system, so that networks in the architecture of the cloud network can be interconnected. The first routing node device is distributed in the access network and is configured to access one or more ISP networks. The second routing node device is distributed in the data center network and is configured to provide data connection between sub-networks in the data center network. The routing-service node device is arranged outside of the access network and the data center network. The mapping relationship between peers (also called peer connections) and a label (also called scheduling labels) is maintained in the distributed system. The mapping relationship is shared among the node devices in the distributed system, so that the node devices in the distributed system can obtain the mapping relationship and accordingly schedule transmission of the service packets in the cloud network according to the mapping relationship. Because transmission scheduling is implemented according to the mapping relationship and the mapping relationship is between the peers and the labels, the distributed system implements peer-level scheduling using a limited quantity of peers. Thereby, routing and forwarding pressure in the distributed system can be effectively reduced, high-performance routing and forwarding and flexible transmission scheduling can be achieved, and a transmission scheduling requirement of the cloud network can be satisfied.

### BRIEF DESCRIPTION OF THE DRAWINGS

FIG. 1 is a schematic diagram of an architecture of a distributed system according to an embodiment of the present disclosure.
FIG. 2 is a schematic flowchart of a transmission scheduling method according to an embodiment of the present disclosure.
FIG. 3 is a schematic diagram of performing routing information transmission in a routing system according to an embodiment of the present disclosure.
FIG. 4 is a schematic diagram of synchronizing forwarding information according to an embodiment of the present disclosure.
FIG. 5 is a schematic flowchart of scheduling transmission of an outbound service packet in a cloud network according to an embodiment of the present disclosure.
FIG. 6a is a schematic flowchart of scheduling transmission of an outbound service packet in a cloud network according to another embodiment of the present disclosure.
FIG. 6b is a schematic flowchart of scheduling transmission of an outbound service packet in a cloud network according to another embodiment of the present disclosure.
FIG. 7 is a schematic diagram of refined scheduling according to an embodiment of the present disclosure.
FIG. 8a is a schematic flowchart of scheduling transmission of an inbound service packet in a cloud network according to an embodiment of the present disclosure.
FIG. 8b is a schematic flowchart of scheduling transmission of an inbound service packet in a cloud network according to another embodiment of the present disclosure.
FIG. 9 is a schematic flowchart of scheduling transmission of an inbound attack traffic in a cloud network according to an embodiment of the present disclosure.
FIG. 10 is a schematic flowchart of a transmission scheduling method according to another embodiment of the present disclosure.
FIG. 11 is a schematic flowchart of a transmission scheduling method according to another embodiment of the present disclosure.
FIG. 12 is a schematic flowchart of a transmission scheduling method according to another embodiment of the present disclosure.

### DESCRIPTION OF EMBODIMENTS

### 1. Cloud network

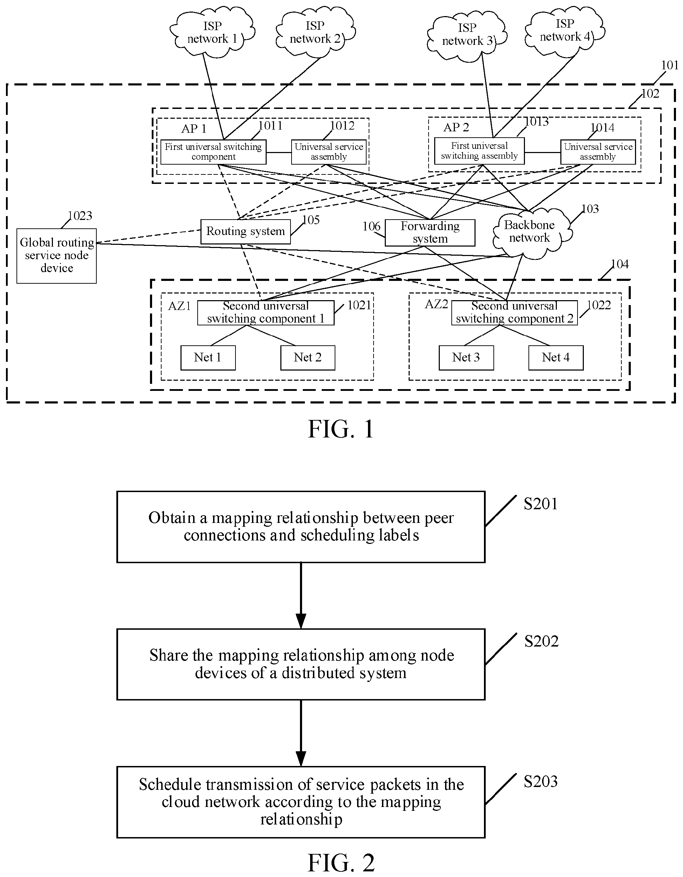

The cloud network is a network that performs service processing based on cloud technology. An embodiment of the present disclosure provides an architecture of a cloud network. As shown in FIG. 1, an architecture of a cloud network 101 may include an access network 102, a backbone network 103, and a data center network 104. The following describes related concepts of networks in the cloud network.

### (1) Access network

The access network is configured to access one or more internet service provider (ISP) networks. The ISP is an operator providing an internet service to an object. The internet service may include but is not limited to: an internet access service, an information service, a value-added service, and the like. The object may be a service requester requesting the ISP to provide the internet service. The ISP network is a network provided by the ISP and configured to provide the internet service to the object. The ISP network is also referred to as a public network or an operator network, and is a portal for the object to enter the internet. Different ISP networks (for example, ISP network 1, ISP network 2, ISP network 3, and ISP network 4 in FIG. 1) are provided by different ISPs.

The access network is a network configured to establish a connection between the ISP network and the data center network. The access network may include a plurality of point-of-presences (POPs). The POP may also be referred to as a network service providing point or a local end, is generally located at an edge of the cloud network, is used as a point of presence of the ISP network, and is configured to help the data center network to access the ISP network to enjoy the internet service. Different POPs may be located in the same region or different regions, and each POP is configured to provide services to a specific region. For example, as shown in FIG. 1, the access network 102 includes POP 1 and POP 2. POP 1 may be located in city A, and is configured to provide services to city A. POP 2 may be located in city B, and is configured to provide services to city B. A region in which the POP is located may be the same as or different from a region served by the POP. For example, in the foregoing example, POP 1 may be located the city A, and may be configured to provide services to city C.

### (2) Data center network

The data center network may also be referred to as an intranet network, and is a network constructed by, for example, a specific enterprise or organization, and providing network services such as storage, computing, or resources, and it may be accessible only to persons and devices within a specific enterprise or organization. The data center network may include a plurality of availability zones (AZs). The AZ is one or more discrete physical data centers that are independent of each other in infrastructures such as electricity and a network in the same region. One AZ may include one or more sub-networks (hereinafter also called nets), and the sub-network is an internal network that can provide network services to a region in the AZ. For example, as shown in FIG. 1, the data center network 104 may comprise AZ 1 and AZ 2. AZ 1 may include net 1 and net 2.

### (3) Backbone network

The backbone network is a network used as a communication hub between different networks in the cloud network and enabling different data center networks to be interconnected. Therefore, the backbone network may also be referred to as a data center interconnection (DCI) network.

In the architecture of the cloud network shown in FIG. 1: The access network 102 is connected to one or more ISP networks, the access network 102 is connected to the backbone network 103, and the data center network 104 is also connected to the backbone network 103. The cloud network is connected to one or more ISP networks, and the networks in the cloud network are interconnected, to provide internet service services to massive (exceeding a preset quantity threshold) objects.

### 3. Border gateway protocol (BGP)

The BGP is configured to exchange routing information between different autonomous systems (ASs). The autonomous system is a set of devices that use the same policy under management of the same organization. In other words, different devices in a network may be divided into different autonomous systems (ASs), or all devices are divided into one autonomous system. Therefore, these devices in one autonomous system have the same routing protocol and are managed by one organization. In this case, communication between different autonomous systems is achieved through the BGP. In this embodiment of the present disclosure, an ISP network may be an AS.

### 4. Routing information and forwarding information

The routing information is information indicating a transmission path of a packet and is generated according to a routing algorithm. One piece of routing information may comprise three elements: a target address, a mask, and a next-hop. The target address is an address of a target network to which the packet is delivered. For example, the target address may be an address of the ISP network, or an address of the sub-network. The mask is a bit mask configured for indicating which bits in a network address identify a subnet at which a device is located, and which bits identify an address of the device. The next-hop indicates the next destination for routing a service packet. When the packet has not been delivered to the target address, the packet may be transferred via the next-hops sequentially until the packet is delivered to the target address. The routing information may be stored in a routing table, and any piece of routing information in the routing table may be called a routing entry. The forwarding information indicates a specific port for the packet, that is, a specific port from which the packet is to be forwarded. The forwarding information is generated according to the routing information. A piece of forwarding information may be generated according to the routing information in the routing table as well as other information (for example, information on a network card or ports of a device). The forwarding information may be stored in a forwarding table, and any piece of forwarding information in the forwarding table may be called a forwarding entry.

Herein the routing information of the ISP network may be called routing information of a public network, and a quantity of pieces of the routing information of the public network may reach a level of millions. Routing information in the data center network may be called intranet routing information. Generally, a quantity of pieces of the intranet routing information is only at a level of hundred-kilos (that is, hundreds of thousands). After the ISP network is connected to the cloud network, the ISP network provides the routing information of the public network to the cloud network. Therefore, in subsequent embodiments of the present disclosure, a full set of the routing information of the cloud network comprises both the routing information of public network and the intranet routing information.

### 5. Peer connection

The peer connection (hereinafter also called peer) refers to a communication connection which, once established between the two devices, it need not identify which device is a service requester or a service provider. The two devices that have established the peer are equal in peer communication. Herein the peer is a communication connection established between a first switch component (for example, an edge access switch (EAS)) in the access network and an ISP network which the first switch component accesses. The peer is allocated with (or mapped to) a scheduling label (a label for scheduling transmission of data packets, hereinafter also called label), and the label would be utilized when scheduling transmission of service packets.

### 6. Cloud technology

The cloud technology is a hosting technology that unifies a series of resources such as hardware, software, and networks in a wide area network or a local area network to implement computing, storage, processing, and sharing of data. The cloud technology is a collective name of a network technology, an information technology, an integration technology, a management platform technology, an application technology, and the like based on an application of a cloud computing business mode, and may form a resource pool, which is used as required, and is flexible and convenient. A backend service of a technical network system requires a large amount of computing and storage resources, such as a video website, an image website, and more portal websites. As the Internet industry is highly developed and applied, each article may have its own identifier in the future and needs to be transmitted to a backend system for logical processing. Data at different levels is separately processed, and data in various industries requires strong system support, which can only be implemented through cloud computing. Therefore, the cloud technology becomes an important support.

### 7. Cloud computing

The cloud computing is a mode of delivery and use of IT infrastructure, and is obtaining required resources in an on-demand and easily scalable manner through a network. The cloud computing in a broad sense is a mode of delivery and use of services, and is obtaining required services in an on-demand and easily scalable manner through a network. Such services may be related to the IT, software, and the Internet, or may be other services. The cloud computing is a product of development and convergence of conventional computer and network technologies such as grid computing, distributed computing, parallel computing, utility computing, network storage technologies, virtualization, and load balance. The cloud computing grows rapidly with development of Internet, real-time data streaming, diversity of connection devices, and demands for searching service, social network, mobile commerce, and open collaboration. Unlike previous parallel distributed computing, generation of the cloud computing conceptually promote changes in an entire Internet mode and enterprise management mode.

A related description of a distributed system provided in the embodiments of the present disclosure is provided below.

FIG. 1 is a schematic diagram of an architecture of a distributed system according to an embodiment of the present disclosure. The distributed system may be used in the cloud network 101. The distributed system may include a first routing node device, a second routing node device, and a routing-service node device.

First, the first routing node device may be deployed in the access network 102 and is configured to access one or more ISP networks. The first routing node device is connected to the backbone network, so that the access network 102 and the backbone network 103 are connected to each other. The first routing node device may comprise a first switch component and a service component.

In embodiments of the present disclosure including the embodiments of both the claims and the specification (hereinafter referred to as "all embodiments of the present disclosure"), the access network 102 may comprise a plurality of POPs. The first routing node device deployed in the access network refers to that at least one first routing node device is deployed in each POP. The first routing node device comprises the first switch component and the service component, and both the first switch component and the service component are connected to the backbone network. As shown in FIG. 1, a single first routing node device is arranged in each of POP 1 and POP 2. The first routing node device in POP 1 comprises first switch component 1011 and service component 1012, and both first switch component 1011 and service component 1012 are connected to the backbone network 103. The first routing node device in POP 2 comprises first switch component 1013 and service component 1014, and both first switch component 1013 and service component 1014 are connected to the backbone network 103.

The first switch component may access one or more ISP networks, establish respective peers with the accessed ISP networks through the BGP, and allocate a respective label to each peer. Herein each switch component may be a universal switch component. Each peer is mapped to its label (that is, there is a mapping relationship between the peers and labels). For example, the first switch component 1011 is connected to an ISP network 1 and an ISP network 2. The first switch component 1011 establishes a peer (marked as peer 1-1) with the ISP network 1 and allocates label 1-1 to peer 1-1. Similarly, the first switch component 1011 establishes a peer (peer 1-2) with ISP network 2 and allocates label 1-2 to peer 1-2. As another example, the first switch component 1013 is connected to an ISP network 3 and ISP network 4. In this case, the first switch component 1013 establishes a peer (marked as peer 2-1) with ISP network 3, and allocates label 2-1 to peer 2-1. Similarly, the first switch component 1013 establishes a peer (marked as peer 2-2) with ISP network 4, and allocates label 2-2 to peer 2-2. The first switch component that has established a peer can perform peer communication with the ISP network. For example, the first switch component may include an edge access switch (EAS). The EAS may be a programmable switch with low costs, for example, the EAS may be a P4 switch.

The service component may include an elastic packet processing (epp) server. Herein each service component may be a universal service component. The epp server may be a server. The service component may be configured to perform refined transmission scheduling on service packets in the cloud network. The so-called refined transmission scheduling refers to that the service packets in the cloud network are subject to flexible transmission scheduling that is improved. The server may be an independent physical server, or may be a server cluster formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

Second, the second routing node device may be deployed in the data center network 104 and is configured to provide data interconnection among the sub-networks inside the data center network 104, so that data exchange can be performed between the sub-networks inside the data center network 104.

The data center network 104 comprises one or more AZs, and each AZ comprises one or more nets. The second routing node device being deployed in the data center network refers to that at least one second routing node device is deployed in each Az. Each second routing node device comprises at least one second switch component, and the second switch component is connected to the backbone network. The second switch component is connected to nets that belong to the same AZ as itself, so as to provide the data interconnection for the nets that are in the same AZ. For example, the data center network as shown in FIG. 1 comprises AZ 1 and AZ 2, AZ 1 comprises net 1 and net 2, and AZ 2 comprises net 3 and net 4. A single second routing node device is arranged in each of AZ 1 and AZ 2. The second routing node device in AZ 1 comprises second switch component 1021, and second switch component 1021 is connected to net 1 and net 2. The second routing node device in AZ 2 comprises second switch component 1022, and second switch component 1022 is connected to net 3 and net 4.

The second switch component may include an internal aggregate switch (IAS). The IAS may be a programmable switch with low costs. For example, the IAS may be a P4 switch.

Third, the routing-service node device 1023 is deployed outside of the access network 102 and the data center network 104 and is connected to the backbone network 103. The routing-service node device 1023 may include an elastic routing service (ERS) server. The routing-service node device may be called a global-routing-service device. That is, a global-routing-service program may be deployed on the ERS server, and the global-routing-service program in the ERS server is deployed in a physical manner or a virtual machine. Being deployed in the physical manner refers to that the global-routing-service program is deployed on the ERS server as physical hardware. Being deployed in the virtual machine refers to that the global-routing-service program is deployed on the ERS server through virtual machine software.

Networks in the architecture of the cloud network each have a hierarchical structure. The backbone network is located at a bottom layer, and the access network and the data center network are located at an upper layer of the backbone network. Upper layer networks (that is, the access network and the data center network) may achieve data connection through the bottom-layer backbone network. Above the bottom-layer backbone network, a forwarding system and a routing system in the distributed system may further be established.

Fourth, a routing system 105 in the distributed system is a routing plane in an entire distributed system. The so-called routing plane is a functional module responsible for routing management and routing control. The routing plane determines a transmission path of a packet in a network and makes a decision on how to forward the packet. For example, herein the routing system 105 may be called a Tencent virtual private network (TVPN) system. The routing system comprises the routing-service node device and routing instances deployed in the distributed system. The routing instance may be an instance generated by using the TVPN. In such case, the routing instance may be called a TVPN instance. The routing instance is configured to provide a routing service for components. For example, the routing instance may be implemented as a routing table. In all embodiments of the present disclosure, the routing instance may be deployed on each service component, each first switch component, and each second switch component. The routing system comprises the routing instance deployed on each service component, the routing instance deployed on each first switch component, the routing instance deployed on each second switch component, and the routing-service node device. These components (the service component, the first switch component, and the second switch component) on which the routing instances are deployed may be called components in the routing system. Each component on which the routing instance is deployed may obtain and store the routing information transmitted by the routing-service node device.

The routing information may be exchanged using the mapping relationship between peers and labels. The node devices (including the first routing node device, the second routing node device, and the global routing node device) in the distributed system may exchange the routing information of the cloud network in the routing system. The routing information comprises the mapping relationship between the peers and the labels.

Each component in the routing system has a respective routing plane, and the routing plane of each component in the routing system determines a transmission path of a packet reaching such component and makes a decision about how to forward the packet. The routing plane of each component in the routing system is deployed and run in a CPU subsystem of each component in the routing system. For example, a routing plane of the EAS is deployed and runs in a CPU subsystem of the EAS; and a routing plane of the IAS is deployed and runs in a CPU subsystem of the IAS. Each component in the routing system obtains, in the respective routing plane, the routing information transmitted by the routing-service node device and thereby stores a full set of the routing information of the cloud network.

Fifth, the forwarding system 106 is a forwarding plane (also called ForwardingFabric) in the entire distributed system. The so-called forwarding plane is a functional module responsible for executing a forwarding decision and performing actual packet forwarding. For example, herein the forwarding system 106 is also called a Tencent egress peering engineering (TEPE) system. The forwarding system may comprise a forwarding plane of each service component, a forwarding plane of each first switch component, and a forwarding plane of each second switch component. The service component, the first switch component, and the second switch component may be also called components in the forwarding system. The forwarding plane of each component in the forwarding system is configured to execute a forwarding decision on a packet reaching such component and perform actual forwarding on the packet. The forwarding plane of each component in the forwarding system is generally deployed and runs in an application specific integrated circuit (ASIC) subsystem of each component in the forwarding system. For example, a forwarding plane of the EAS is deployed and runs in an ASIC subsystem of the EAS; and a forwarding plane of the IAS is deployed and runs in an ASIC subsystem of the IAS. For example, the ASIC subsystem may be an ASIC chip. The mapping relationship between the peers and the labels is maintained in the distributed system. The node devices in the distributed system may perform, in the forwarding system, transmission scheduling on the service packet according to the mapping relationship. The transmission scheduling herein may refer to forwarding the service packets according to their respective routing information.

Each component in the forwarding system maintains a respective local forwarding table. Each component in the forwarding system may synchronize their forwarding information in its forwarding plane according to the full set of the routing information of the cloud network. The forwarding information synchronized by each component in the forwarding system is stored in the respective local forwarding table, and the local forwarding table of each component in the forwarding system comprises an entry for the labels. When scheduling transmission of the service packets, each component in the forwarding system may schedule transmission of the service packets in the cloud network according to the labels in the local forwarding table.

The transmission scheduling method provided in embodiments of the present disclosure may be implemented on a basis of interaction among the node devices in the distributed system as shown in FIG. 1. FIG. 2 is a schematic flowchart of a transmission scheduling method according to an embodiment of the present disclosure. The method comprises the following steps S201 to S203.

S201. Obtain a mapping relationship between peers and labels.

In all embodiments of the present disclosure, when the first switch component accesses one or more ISP networks, the first switch component may establish peers with the accessed ISP networks respectively through the BGP and allocates the label to each peer. Each peer refers to a communication connection established between a first switch component and an ISP network connected to the first switch component. Each peer is mapped to one respective label.

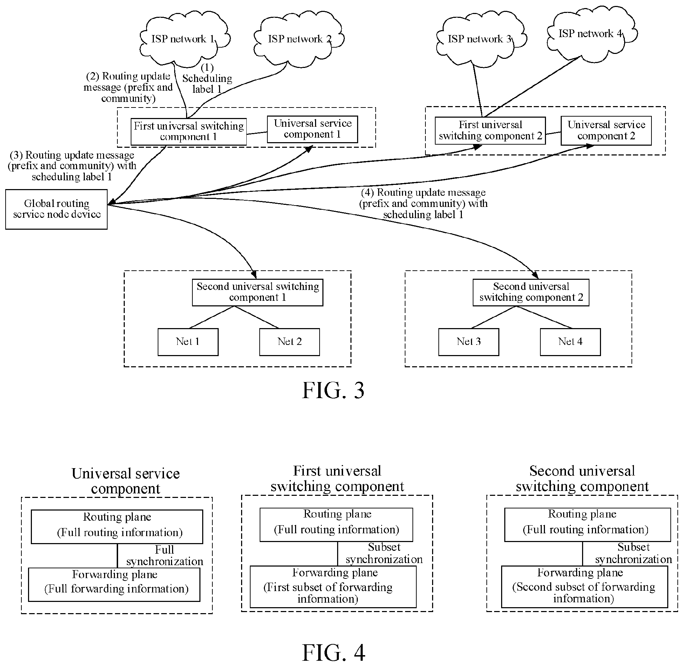

For example, FIG. 3 is a schematic diagram of performing routing information transmission in a routing system according to an embodiment of the present disclosure. First switch component 1 accesses two ISP networks, which are ISP network 1 and ISP network 2. The first switch component 1 establishes peer 1 with the ISP network 1 through the BGP and allocate label 1 to peer 1. The first switch component 1 establishes peer 2 with the ISP network 2 through the BGP and allocate label 2 to peer 2.

In all embodiments of the present disclosure, the first switch component may store the mapping relationship between the peers and the labels. As shown in FIG. 3, first switch component 1 may store the mapping relationship between the peer 1 and the label 1 and the mapping relationship between the peer 2 and the label 2. As an example, the first switch component may deliver the mapping relationship between the peers and the labels locally. The local delivering refers to delivering the mapping relationship between the peers and the labels to the forwarding plane of the first switch component. During subsequent transmission scheduling, the first switch component can thus schedule transmission on (for example, forwarding) the service packets according to the mapping relationship stored in its forwarding plane.

In a case that the first switch component accesses N ISP networks, N peers are established and the mapping relationship of N peer-label pairs are locally delivered. In the foregoing example, the first switch component establishes peer 1 and peer 2, and the mapping relationship for the two peers are locally delivered. That is, the mapping relationship between peer 1 and label 1 and the mapping relationship between peer 2 and label 2 are locally delivered.

S202. Share the mapping relationship among the node devices of the distributed system.

In all embodiments of the present disclosure, the node devices in the distributed system may share the routing information of the cloud network through exchanging within the routing system. The routing information comprises the mapping relationship between the peers and the labels. The routing-service node device in the routing system may be configured to collect the routing information of the cloud network and transmit the routing information of the cloud network to each component in the routing system. In all embodiments of the present disclosure, the routing-service node device may be an ERS server. The ERS server may transmit the routing information of the cloud network to each component, on which the routing instance is deployed, in the routing system via a global-routing-service program.

The routing-service node device in the routing system is configured to collect the routing information of the cloud network and dispense the routing information of the cloud network to each component in the routing system, which may include the following two cases. In a first case, each component in the routing system sends its routing information to the routing-service node device, and the routing-service node device summarizes the routing information sent by each component in the routing system after receiving the routing information, and then transmits the summarized routing information to each component in the routing system. In second case, after receiving the routing information sent by any component in the routing system, the routing-service node device transmits such routing information to others component in the routing system.

The routing information required for forwarding service packets toward a peer (hereinafter referred to the "routing information related to a peer") comprises a label mapped to the peer. For example, there is a mapping relationship between peer 1 and label 1, and the routing information related to the peer 1 comprises the label 1. The routing information comprises three elements: a target address, a mask, and a next-hop. The routing information related to the peer may satisfy any of the following conditions: the target address is an address of a device (for example, an address of the first switch component, or an address of an ISP network) connected by the peer, the next-hop is an address of a device connected by the peer, or the mask is a mask for a device connected by the peer.

In all embodiments of the present disclosure, when the first switch component sends the routing information of its accessed ISP networks to the routing-service node device, the first switch component may determine the respective peer connecting each ISP network, and encapsulates the label mapped to the peer into the routing information of such ISP network. That is, for each ISP network, the first switch component sends the routing information encapsulated with the label to the routing-service node device. For example, peer 1 is established between a first switch component and ISP network 1, and peer 2 is established between the first switch component and ISP network 2. The first switch component encapsulates label 1 mapped to peer 1 into the routing information of ISP network 1, encapsulates a label 2 mapped to peer 2 in the routing information of ISP network 2, and then sends the routing information of ISP network 1 encapsulated with label 1 and the routing information of ISP network 2 encapsulated with label 2 to the routing-service node device.

When receiving the routing information of each ISP network encapsulated with the label sent by the first switch component, the routing-service node device may forwards the routing information of each ISP network encapsulated with the label to other components in the routing system, so that each component in the routing system stores the routing information encapsulated with the label.

When the routing information of the cloud network is updated, the routing-service node device may transmit the updated routing information to each component in the routing system. Updating routing information of the cloud network is updated may refer to that the routing information coming from any component in the routing system changes, or routing changes due to any component in the routing system accessing a new network. For example, the first switch component receives a routing update message from its accessed ISP network, which triggers an update of the routing information of the cloud network. The routing update message carries new routing information. Accordingly, the first switch component may add the label, which is mapped to the peer connecting the ISP network, into the routing update message and send the routing update message with the added label to the routing-service node device. The routing-service node device then transmits the routing update message with the added label to each component in the routing system, so that each component in the routing system updates their routing information according to the received routing update message.

In all embodiments of the present disclosure, the routing update message may be a BGP message. A prefix and a community attribute may be further added into the BGP message. The community attribute is configured for identifying routes having a certain feature and may be optional.

That the first switch component receiving the routing update message from its accessed ISP network may include at least one of the following cases. In a first case, when the first switch component accesses the ISP network for the first time, the first switch component receives the routing update message from the ISP network. In a second case, when an ISP network already accessed by the first switch component changes, the first switch component receives the routing update message from the ISP network.

For ease of understanding, a process in which routing information required for forwarding service packets toward an ISP network (hereinafter also referred to as the "routing information related to the ISP network") is transmitted to each component in a routing system is specifically described by using FIG. 3 as an example. A process of the transmission may include following steps. (1) When first switch component 1 accesses ISP network 1, it establishes a peer (marked as peer 1) with ISP network 1, and label 1 is allocated to peer 1. (2) ISP network 1 sends the routing update message to first switch component 1, where the routing update message carries new routing information. (3) When receiving the routing update message, first switch component adds label 1 into the routing update message and sends the routing update message with added label 1 to the routing-service node device via a deployed routing instance. (4) The routing-service node device transmits the routing update message with added label 1 to each component, in which a routing instance is deployed, in the routing system. As shown in FIG. 3, the global service node device may transmit the routing update message with added label 1 to service component 1, service component 2, first switch component 2, second switch component 1, and second switch component 2 in the routing system via the routing instances. After receiving the routing update message with added label 1, these components in the routing system may store the new routing information and label 1 carried in the routing update message.

Through transmission within the routing system, the routing-service node device and other components in the routing system each store a full set of the routing information of the cloud network. In all embodiments of the present disclosure, the full set of the routing information of the cloud network may be stored in a respective routing plane of each component in the routing system.

Moreover, each component in the routing system may synchronize forwarding information in its respective forwarding plane on a basis of the full set of the routing information of the cloud network stored it. Synchronization of the forwarding information is different in forwarding planes of different components. FIG. 4 is a schematic diagram of synchronizing forwarding information by each component according to an embodiment of the present disclosure. The service component may synchronize the full set of the forwarding information of the cloud network in its forwarding plane according to the full set of the routing information stored by it, and the full set of the forwarding information is stored in a local forwarding table of the service component. In other words, the routing plane of the service component stores the full set of the routing information, and the forwarding plane of the service component also stores the full set of the forwarding information. Storing the full set of the forwarding information in the forwarding plane of the service component facilitates subsequent refined scheduling of transmission of the service packets. The full set of the forwarding information may comprise forwarding information related to each ISP network, the forwarding information related to each sub-network in the data center network, and the like. The full set of the forwarding information comprises the label(s) mapped to the peer(s). Since the forwarding information is generated according to the routing information, the forwarding information related to the ISP network is generated according to the routing information related to the ISP network. The routing information specifies three elements: the target address, the mask, and the next-hop. Therefore, the routing information related to an ISP network may refer to the routing information satisfies at least one of the following conditions: the target address is an address of the ISP network, the next-hop indicates the address of the ISP network, or the mask is a mask of the ISP network.

In respective forwarding planes of the first switch component and the second switch component, synchronization is not performed on the full set of the forwarding information but on a subset according to an actual requirement. Reasons are as follows. First, pieces of routing information of a public network are at a million level. The first switch component establishes a peer and allocates a respective label when accessing an ISP network, and the first switch component stores the mapping relationship between the label and the peer. The peers of the first switch component are at a level of hundreds. When forwarding a service packet, the first switch component only needs to forward the service packet to a target peer according to a label carried in the service packet, that is, the scheduling has peer granularity. Hence, the first switch component need not maintain the full set of the forwarding information. Herein the mapping relationship between a label and a corresponding peer may be called a TEPE entry. Second, intranet routing information is internally planned within the data center network. A quantity of pieces of the intranet routing information is far less than a quantity of pieces of routing information of the public network. Hence, the intranet routing information can be directly dispensed to the forwarding planes of the first switch component and the second switch component.

Due to the foregoing two reasons, the first switch component may synchronize a first subset of the forwarding information of the cloud network in its forwarding plane according to the full set of the routing information which it stores. The first subset of the forwarding information comprises the forwarding information related to the ISP network accessed by such first switch component. The forwarding information related to the ISP network accessed to the first switch component comprises the corresponding TEPE entry. In all embodiments of the present disclosure, the first subset of the forwarding information may further comprise the forwarding information required for forwarding service packets to the sub-network(s) (hereinafter also referred to the "forwarding information related to the sub-networks").

Maintaining the first subset of the forwarding information of the cloud network in the forwarding plane of the first switch component may comprise following steps. The first switch component determines ISP network(s) that it accesses, generates the first subset of the forwarding information according to the routing information related to the ISP network(s), and synchronizes the first subset of the forwarding information in its forwarding plane accordingly. The routing information related to an ISP network accessed by the first switch component comprises the label mapped to the peer connecting the first switch component and the ISP network. In all embodiments of the present disclosure, the synchronized first subset of the forwarding information of the cloud network may be stored in the local forwarding table of the first switch component.

The first subset of the forwarding information comprises all its TEPE entries. That is, if the first switch component establishes peers with 10 ISP networks, a quantity of mapping relationships between the peers and the labels is 10, and the first subset of the forwarding information comprises the 10 TEPE entries. The first subset of the forwarding information is synchronized in the forwarding plane of the first switch component. Hence, when the first switch component forwards the service packet, it only needs to forward the service packet to the peer corresponding to the label carried in the service packet, and to peer-level scheduling is achieved. It is no longer necessary to perform routing and forwarding on a basis of a million-level public network. Herein the forwarding mode of the peer-level scheduling may be called TEPE forwarding.

The second switch component maintains the second subset of the forwarding information of the cloud network through synchronization in its forwarding plane according to the full set of the routing information that it stores. The second subset of the forwarding information comprises the forwarding information required for forwarding service packets to a net (hereinafter also referred to the "forwarding information related to the net") that belongs to the same AZ as the second switch component. Maintaining the second subset of the forwarding information of the cloud network in the forwarding plane of the second switch component through synchronization may comprise following steps. The second switch component determines the net(s) that belongs to the same AZ as itself, generates the forwarding information related to the net(s) according to the full set of the routing information that it stores, generates the second subset of the forwarding information using the forwarding information related to the net(s), and accordingly synchronizes the second subset of the forwarding information in its forwarding plane. The second subset of the forwarding information of the cloud network may be stored in the local forwarding table of the second switch component.

In all embodiments of the present disclosure, the second subset of the forwarding information may further comprises: the forwarding information required for forwarding service packets to the ISP networks (hereinafter also referred to as the "forwarding information related to the ISP networks"). That is, the forwarding information related to the ISP networks are also synchronized in the second switch component. Thereby, a pressure of outbound traffic on the service component can be reduced or shared in a scenario of an elephant flow or a scenario in which refined scheduling does not need to be performed on the service packets. The elephant flow concerns transmitting a large quantity of ordinary service packets continuously during network transmission.

Through the foregoing synchronization of the full set of the forwarding information in the service component and synchronization of the subsets of the forwarding information in the first switch component and the second switch component, a large quantity (for example, millions level) of public-network forwarding entries can be replaced into a small quantity (for example, hundreds level) of TEPE entries. Thereby, routing and forwarding for a million-level public network can be implemented using limited entry storage space of an ASIC subsystem (for example, an ASIC chip). The entry storage space refers to a storage space configured for storing the forwarding entries.

S203. Schedule transmission of service packets in the cloud network according to the mapping relationship.

A forwarding system in the distributed system may schedule transmission of the service packet in the cloud network according to the mapping relationship. Each node device in the distributed system schedules the transmission of the service packets in the cloud network using the forwarding system according to the mapping relationship. In all embodiments of the present disclosure, the components of each node device schedule the transmission of the service packets in the cloud network according to the forwarding information in their respective local forwarding tables. When the service packet in the cloud network reaches any component in the forwarding system, such component searches its local forwarding table for the forwarding information required for forwarding such service packet. In a case that the required forwarding information is found, the component encapsulates the label, which is indicated in the found forwarding information, into the service packet and forwards the service packet as instructed by the found forwarding information. In a case that the required forwarding information is not found, the component transmits the service packet to a component indicated by its default next-hop, and then such component schedules the transmission of the service packet.

The service packet may be an inbound service packet or an outbound service packet. The inbound service packet is a service packet transmitted from the ISP network to the data center network. The outbound service packet is a service packet transmitted from the data center network to the ISP network. A process of scheduling transmission of the service packets in the cloud network according to the forwarding information in the respective local forwarding table of each component in the forwarding system would be described in detail in subsequent embodiments for the inbound service packet and the outbound service packet.

In summary, the distributed system provided herein comprises the first routing node device(s), the second routing node device(s), and the routing-service node device. The first routing node device comprises the service component and the first switch component. The second routing node device comprises the second switch component. Herein a low-price component is utilized to replace commercial router, so that a large-scale commercial router can be decoupled, operation can be greatly simplified, and operation costs can be reduced, thereby improving scalability and flexibility of the distributed system. In addition, the routing system provides the labels to each component in the forwarding system by transmitting the mapping relationship between the labels and the peers. According to the transmission scheduling method implemented based on the distributed system, in a public network scenario, a problem that a stored forwarding entry is insufficient due to limited storage space of a switch component is resolved. Tetra-level forwarding is supported (herein the tetra-level forwarding defines a forwarding bandwidth, where Tetra = 1024 Giga, that is, a forwarding bandwidth of 1024G can be supported), and an amount of routing information can be reduced. Million-level routing and forwarding can be implemented using kilo-level switching chips (that is, a quantity of pieces of routing and forwarding information that can be processed by the switching chip is at a level of thousands). Thereby, high-performance routing and forwarding and flexible transmission scheduling can be achieved, satisfying a requirement on transmission scheduling of the cloud network.

Next, the process of each component in the forwarding system scheduling the transmission of the service packets in the cloud network according to the forwarding information in the respective local forwarding table is described separately for the inbound service packet and the outbound service packet.

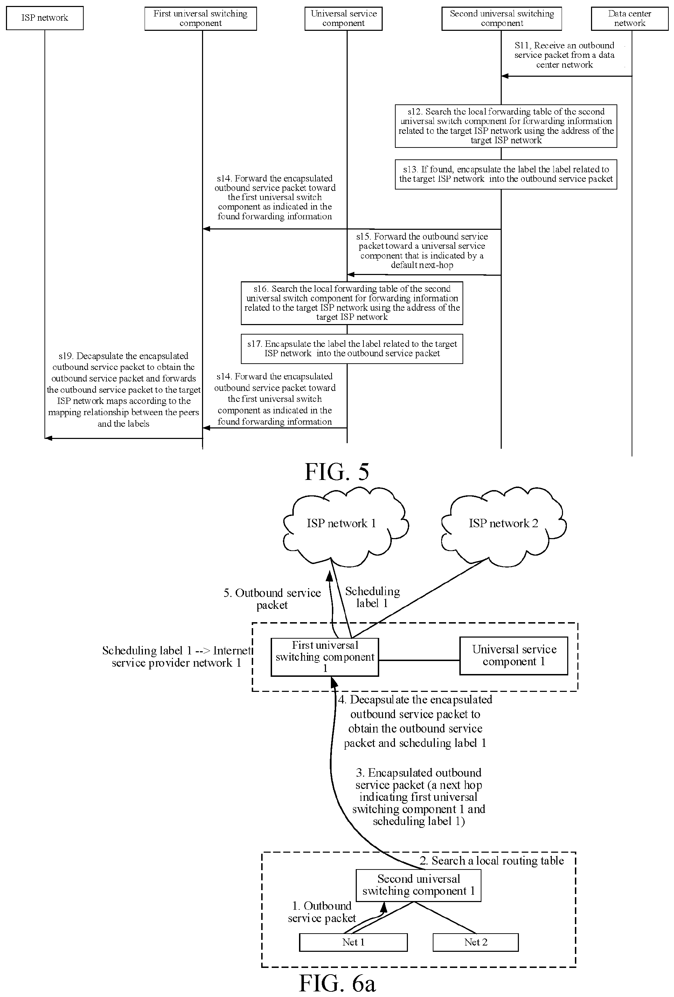

FIG. 5 is a schematic flowchart of scheduling the transmission of an outbound service packet in a cloud network according to an embodiment of the present disclosure. A process of scheduling the transmission of the outbound service packet in the cloud network comprises following steps s11 to s19.

s11. The second switch component receives an outbound service packet from a data center network, the outbound service packet carrying an address of a target ISP network.

In all embodiments of the present disclosure, the second switch component may receive an outbound service packet sent by a net, which is connected to the second switch component, in the data center network and obtain the address of the target ISP network from the received outbound service packet. Then, the process proceeds to step s12 is performed. For example, the second switch component is connected to net 1 in the data center network, and the second switch component may receive an outbound service packet sent by net 1 and extract the address of the target ISP network from the outbound service packet. The outbound service packet may be a response from the net in the data center network after the net receives a service request sent from an object. For example, the service request is a data query request, and the outbound service packet carries a query result in response to the data query request.

s12: The second switch component searches the local forwarding table of the second switch component for forwarding information related to the target ISP network using the address of the target ISP network. In a case the related forwarding information is found, that is, the forwarding information required for forwarding the outbound service packet is explicit in the local forwarding table, the process proceeds to steps s13 and s14. Otherwise, there is no explicit forwarding information required for forwarding the outbound service packet in the local forwarding table, and the outbound service packet shall be forwarded to another component that stores the full set of the forwarding information. That is, the process proceeds to s15 to s18.

The local forwarding table of the second switch component records the second subset of the forwarding information of the cloud network, and the second subset is maintained by the second switch component through synchronization. A piece of the forwarding information related to the target ISP network may comprise: the address of the target ISP network, a next-hop, a port of the next-hop, a label, and the like. For example, the local forwarding table of the second switch component may be as shown in Table 1. The address of the target ISP network is "xxx.xxx.xxx.xxx". The second general component may find the related forwarding information from Table 1 according to the entry "xxx.xxx.xxx.xxx", and then the related forwarding information indicates that the next-hop is first service component 1, the port of the next-hop is port A of first service component 1, and the label is label 1.

**Table 1**

| Address of target ISP network | Next-hop | Port of next-hop | Label |
|---|---|---|---|
| XXX.XXX.XXX.XXX | First service component 1 | Port A of first service component 1 | label 1 |
| xxx.xxx.xxx.x11 | First service component 1 | Port B of first service component 1 | label 2 |

s13. The second switch component encapsulates the label corresponding to the address of the target ISP network (hereinafter also called the label related to the target ISP network) into the outbound service packet.

s14. The second switch component forwards the encapsulated outbound service packet toward the first switch component as indicated in the found forwarding information. The process then proceeds to step s19.

s15. The second switch component forwards the outbound service packet toward a service component that is indicated by a default next-hop.

The second switch component may encapsulate the outbound service packet with an address of the default next-hop and then forward the encapsulated outbound service packet toward the default next-hop. The local forwarding table of the service component records the full set of the forwarding information of the cloud network.

s16. The service component searches a local forwarding table of the service component for the forwarding information related to the target ISP network using the address of the target ISP network.

In all embodiments of the present disclosure, the local forwarding table of the service component may record the full set of the forwarding information of the cloud network. After receiving the outbound service packet from the second switch component, the service component may extract the address of the target ISP network from the outbound service packet, and the forwarding information related to the target ISP network can be successfully found from its local forwarding table according to the address of the target ISP network. The process then proceeds to step s17.

s17. The service component encapsulates the label related to the target ISP network into the outbound service packet.

s18. The service component forwards the encapsulated outbound service packet toward the first switch component as indicated in the found forwarding information. The process then proceeds to step s19.

s19. The first switch component decapsulates the encapsulated outbound service packet to obtain the outbound service packet and forwards the outbound service packet to the target ISP network maps according to the mapping relationship between the peers and the labels.

After receiving the encapsulated outbound service packet, the first switch component may decapsulate the encapsulated outbound service packet to obtain the outbound service packet and the label. Then, the first switch component determines a peer mapped to the label according to the mapping relationship that is stored at its forwarding plane and forwards the outbound service packet to the target ISP network directly using the peer. The first switch component need not search its local routing table due to usage of the mapping relationship between the peers and the labels.

For ease of understanding, an entire transmission scheduling process of the outbound service packet is described below by using two specific examples.
(1) The outbound service packet is transmitted from net 1 in the data center network to ISP network 1.

FIG. 6a is a schematic flowchart of scheduling transmission of an outbound service packet in a cloud network according to another embodiment of the present disclosure. A process of scheduling transmission of the outbound service packet comprises follow steps. First, second switch component 1 receives the outbound service packet from net 1 in the data network center, where the outbound service packet carries the address of the target ISP network, i.e., ISP network 1. Second, second switch component 1 searches its local forwarding table for forwarding information related to ISP network 1 using the address of ISP network 1. In this case, the forwarding information related to the ISP network 1 is successfully found in the local forwarding table. As an example, the piece of forwarding information related to the ISP network 1 comprises: label 1, the next-hop that indicates first switch component 1, and the like, which are related to ISP network 1. Second switch component 1 encapsulates label 1 into the outbound service packet to obtain the encapsulated outbound service packet. Third, second switch component 1 forwards the encapsulated outbound service packet to first switch component 1 according to the found forwarding information. Fourth, after receiving the encapsulated outbound service packet, first switch component 1 decapsulates the encapsulated outbound service packet to obtain the outbound service packet and label 1. First switch component 1 determines a peer mapped to label 1 according to the mapping relationship between labels and peers. Fifth, the outbound service packet is forwarded to an egress corresponding to ISP network 1 using the peer mapped to label 1.

(2) The outbound service packet is transmitted from net 3 in the data center network to an ISP network 3.

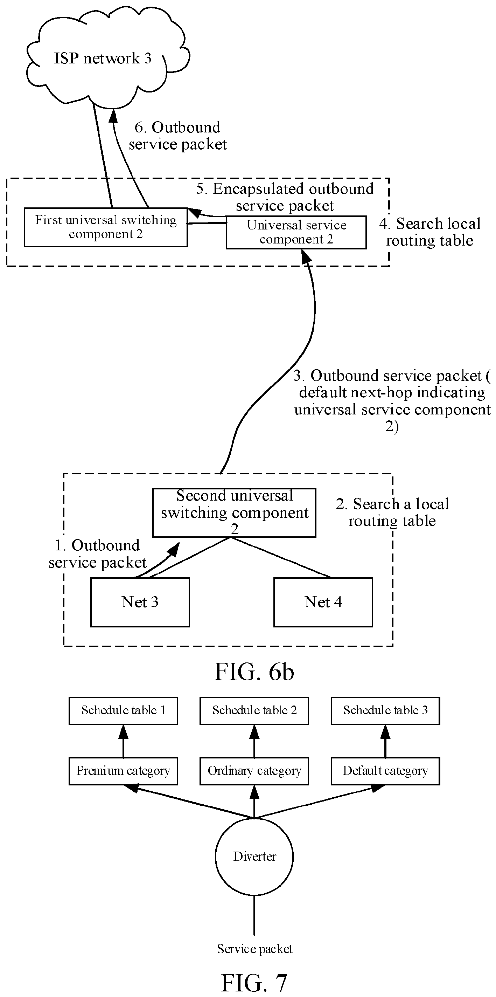

FIG. 6b is a schematic flowchart of scheduling the transmission of the outbound service packet in the cloud network according to another embodiment of the present disclosure. A process of scheduling the transmission of the outbound service packet comprises following sub-steps. First, second switch component 2 receives the outbound service packet from net 3 in the data network center, where the outbound service packet carries the address of the target ISP network, i.e., ISP network 3. Second, second switch component 2 searches its local forwarding table for forwarding information related to ISP network 3 using the address of the ISP network 3. Third, when second switch component 2 fails to find the forwarding information related to ISP network 3, the second switch component 2 transmits the outbound service packet to its default next-hop, which indicates service component 2. Fourth, after receiving the outbound service packet, service component 2 searches its local forwarding table for the forwarding information related to the ISP network using the address of ISP network 3, and the piece of forwarding information related to the ISP network 3 comprises the address of the ISP network 3, the next-hop (indicating first switch component 2, and label 3, which are related to the ISP network 3. Fifth, service component 2 encapsulates label 3 into the outbound service packet to obtain the encapsulated outbound service packet and forwards the encapsulated outbound service packet toward first switch component 2 as instructed in the found forwarding information. Sixth, after receiving the encapsulated outbound service packet, first switch component 2 decapsulates the encapsulated outbound service packet to obtain the outbound service packet and label 3. First switch component 2 then determines a peer mapped to the label 3 according to the stored mapping relationship between the labels and the peers, and then directly forwards the outbound service packet to an egress corresponding to ISP network 3 using the peer mapped to label 3.

As described above, the outbound service packet is forwarded according to the label, and the first switch component only needs to forward the outbound service packet to the peer corresponding based on the label carried in the outbound service packet. Hence, peer-level scheduling, and routing and forwarding are not necessary to be performed in the million-level public network (that is, routing and forwarding are not necessary to be performed using routing information in the million-level public network).

In addition, herein refined scheduling may be performed on the service packets (for example, the outbound service packets). In addition to storing the full set of the routing information and the full set of the forwarding information, the service component may be further configured with a flow classification rule and a schedule table for the forwarding system. The flow classification rule defines a manner of classifying the service packet, and each schedule table is configured to record information for transmitting the service packets of a respective category. FIG. 7 is a schematic diagram of refined scheduling according to an embodiment of the present disclosure. As an example, the flow classification rule specifies that a service packet having voice content is classified into an "ordinary" category, a service packet having video content is classified into a "premium" category, and a service packet having text content is classified into a default category. The premium category corresponds to schedule table 1 that records information for transmitting service packets of the premium service category. The ordinary service category corresponds to schedule table 2 that records information for transmitting service packets of the ordinary service category. The default service category corresponds to schedule table 3 that records information for transmitting service packets of the default service category. As another example, the flow classification rule specifies that a service packet having high requirement on real-time performance is classified into a "real-time service" category, and a service packet having low requirement on real-time performance is classified into a "non-real-time service" category.

In all embodiments of the present disclosure, the information in the schedule table may include a path and an egress for transmitting service packets of the corresponding category. The information in the schedule table may be comprehensively determined according to the corresponding category of the service packet, transmission quality of different egresses, and transmission costs. As an example, for service packets of the premium category, the transmission quality at the corresponding egress is high, and the transmission costs of using the path are high. The full set of routing information of the distributed system may be summarized to find the egress having high transmission quality and the path having the high transmission costs, and accordingly the path and the egress are utilized for transmitting the service packets of the premium category. For example, the path may be from first switch component to Telecom^{™} ISP network, and the egress may be "Telecom ISP network ". As another example, for service packets of the default category, the transmission quality at the egress is low, and the transmission costs using the path are low. The full set of the routing information of the distributed system may be summarized to find the egress having low transmission quality and the path having low transmission costs, and accordingly the path and the egress are utilized for transmitting the service packets of the default category. For example, the path may be from first switch component to Unicom^{™} ISP network of Unicom, and the egress may be " Unicom^{™} ISP network ".

Hence, scheduling the transmission of the service packets in the cloud network may further comprise following steps. The service packet in the cloud network is classified according to the flow classification rule to obtain the category to which the service packet belongs. The transmission of the service packet is scheduled according to the recorded information in the schedule table for the category. In all embodiments of the present disclosure, the service component may be provided with a diverter, and the service component invokes the diverter to classify the service packets in the cloud network according to the flow classification rule to obtain the category to which each service packet belongs. For example, in FIG. 7, the diverter is invoked to classify the service packets in the cloud network according to the flow classification rule to determine that the category of a certain service packet is the premium category, then the service component determines schedule table 1 corresponding to the premium category, and schedules the transmission of the service packet according to the information recorded in schedule table 1.

The service packet may be the outbound service packet. The service component may receive the outbound service packet from the second switch component and then choose, on requirement, to schedule transmission of the outbound service packet according to the local forwarding table or schedule transmission of the outbound service packet in a more refined manner, which is not limited herein. In the foregoing manner, a requirement on fine and customized flexible scheduling on a basis a service and a flow in the cloud network can be satisfied, flexibility of transmission scheduling of the service packet in an entire cloud network is improved, and advantages are obvious in a plurality of dimensions such as costs, performance, and flexibility.

A related description is provided on a procedure of scheduling the transmission of an inbound service packet in a cloud network.

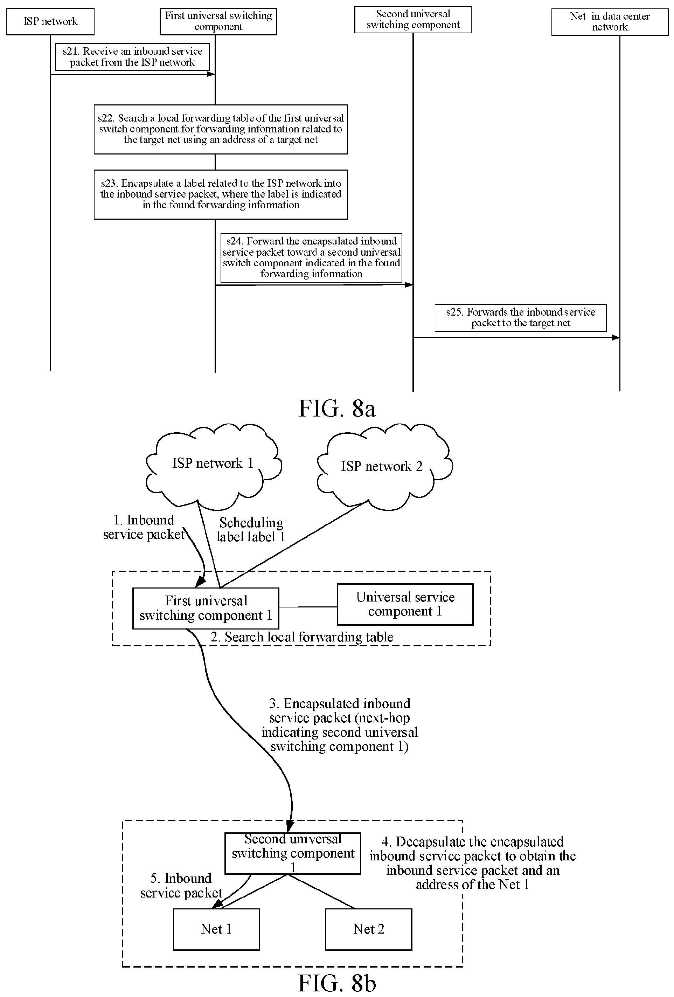

FIG. 8a is a schematic flowchart of scheduling the transmission of an inbound service packet in a cloud network according to an embodiment of the present disclosure. The process of scheduling the transmission of the inbound service packet in the cloud network comprises following steps S21 to s25.

s21. A first switch component receives the inbound service packet from an ISP network, where the inbound service packet carries an address of a target net in a data center network.

s22: The first switch component searches its local forwarding table for forwarding information related to the target net using the address of the target net. The local forwarding table of the first switch component records the first subset of the forwarding information of the cloud network, and the first subset is maintained by the first switch component through synchronization.

In all embodiments of the present disclosure, forwarding the inbound service packet depends on intranet forwarding information. An amount of intranet routing information is very small when compared with an amount of routing information of a public network. Generally, the intra routing information is at a level of several thousands of pieces. Hence, when the forwarding plane of the first switch component and the forwarding plane of the second switch component synchronize the forwarding information, they may store the forwarding information related to all nets in the data center network. Hence, the first subset of the forwarding information recorded in the local forwarding table of the first switch component comprises the forwarding information related to the target net. The first switch component extracts the address of the target net from the inbound service packet, and then finds the forwarding information related to the target net successfully from its local forwarding table according to the address. The process then proceeds to step s23. A piece of the found forwarding information related to the target net may comprise: the address of the target net, the next-hop, the port of the next-hop, the label related to the ISP network.

s23. The first switch component encapsulates the label related to the ISP network (that is, the label mapped to its peer connecting the ISP network) into the inbound service packet, where the label related to the ISP network is indicated in the found forwarding information.

s24. The first switch component forwards the encapsulated inbound service packet toward the second switch component indicated in the found forwarding information.

s25. The second switch component decapsulates the encapsulated inbound service packet to obtain the inbound service packet and forwards the inbound service packet to the target net.

After receiving the encapsulated inbound service packet forwarded by the first switch component, the second switch component may decapsulate the encapsulated inbound service packet to obtain the inbound service packet and the address of the target net. Then, the second switch component transmits the inbound service packet to the target net according to the address of the target net.

For ease of understanding, a process of scheduling transmission of the inbound service packet is described below by using a specific example. FIG. 8b is a schematic flowchart of scheduling the transmission of the inbound service packet in a cloud network according to an embodiment of the present disclosure. A process of scheduling transmission of the inbound service packet comprises following steps. First, first switch component 1 receives the inbound service packet from ISP network 1, and the inbound service packet carries the address of target net 1 in the data center network. Second, first switch component 1 searches its local forwarding table for forwarding information related to net 1 using the address of net 1, and a piece of the found forwarding information related to net 1 comprises label 1 related to ISP network 1 and a next-hop indicating second switch component 1. Third, as instructed by the found forwarding information, first switch component 1 encapsulates the label 1 into the inbound service packet and then forwards the encapsulated inbound service packet toward second switch component 1. Fourth, second switch component 1 decapsulates the encapsulated inbound service packet to obtain the inbound service packet and the address of the net 1, and then forwards the inbound service packet to net 1 based on the address of net 1.

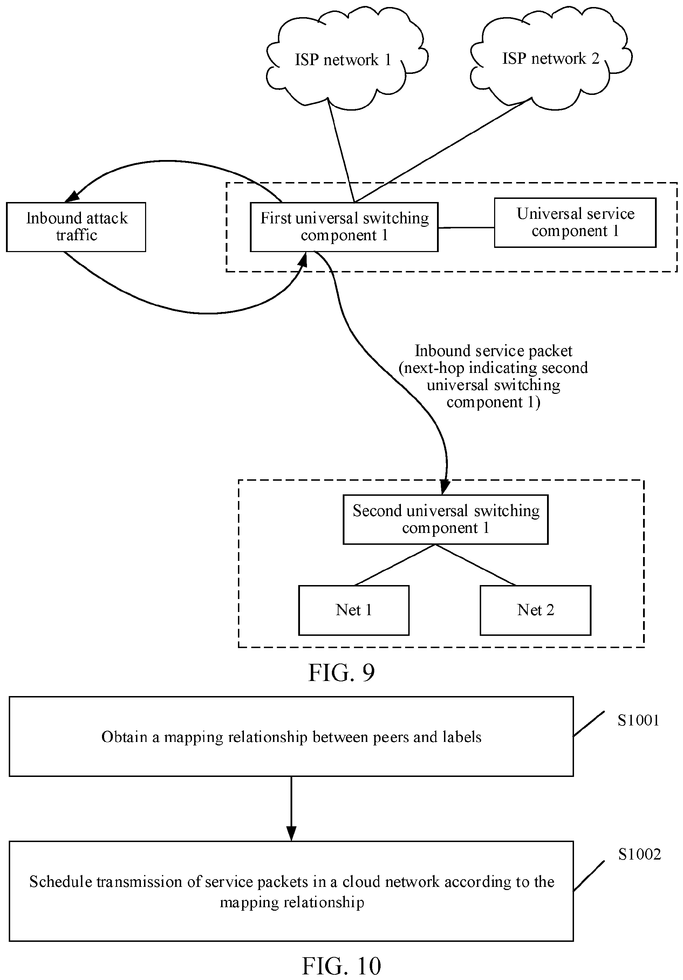

As shown FIG. 8b, transmission scheduling of the inbound service packet is directly performed by the first switch component and the second switch component and not by the service component (for example, the epp server). FIG. 9 is a schematic flowchart of scheduling the transmission of an inbound attack traffic according to an embodiment of the present disclosure. The inbound attack traffic is a traffic attacking service provided by the data center network. When the first switch component receives the inbound attack traffic from a network, the inbound attack traffic is processed by the first switch component, because all inbound service packets pass the first switch component (that is, they are processed by hardware). Hence, the service component is not exposed to risks. Security of the service component is ensured. Herein, the inbound attack traffic may be a distributed denial of service (DDOS) attack.

In summary, each component in the forwarding system schedules the transmission of the inbound service packet and the outbound service packet in the cloud network according to forwarding information in its respective local forwarding table. The first switch component and the second switch component utilize different asymmetric processing for the outbound service packet and the inbound service packet. The TEPE forwarding can be performed on the outbound service packet through the asymmetric processing, thereby addressing an issue that forwarding entries stored are insufficient due to limited storage space of switch components in a public network scenario. Tetra-level forwarding is supported, and an amount of routing information can be reduced. Hence, routing and forwarding of a million-level network can be achieved on a thousand-level switching chip. High-performance routing and forwarding and flexible transmission scheduling can be implemented, and a requirement on transmission scheduling of the cloud network can be met.

Next, the transmission scheduling method provided in the embodiments of the present disclosure is described respectively from the perspective of first switch component, the second switch component, and the service component.

FIG. 10 is a schematic flowchart of a transmission scheduling method according to an embodiment of the present disclosure. The method is executable by the first switch component in the distributed system, and the transmission scheduling method includes the following steps S1001 to S1003.

S1001. Obtain the mapping relationship between the peers and the labels.

In all embodiments of the present disclosure, the first switch component may be configured to access ISP network(s). The first switch component establishes peers with its accessed ISP networks through the BGP, allocate the label to each peer, and store a mapping relationship between the peers and the labels.

S1002. Schedule the transmission of the service packets in the cloud network according to the mapping relationship. The service packet includes an outbound service packet and an inbound service packet.
(1) When the service packet is the outbound service packet, and step S1002 comprises following sub-steps. First, the encapsulated outbound service packet forwarded by the second switch component is received. After receiving the outbound service packet from the data center network, the second switch component encapsulates the outbound service packet with the label related to the target ISP network to obtain the encapsulated outbound service packet. Second, the encapsulated outbound service packet is decapsulated to obtain the outbound service packet, and the outbound service packet is forwarded to the target ISP network according to the mapping relationship between the peers and the labels.
(2) When the service packet is the outbound service packet, and step S1002 comprises following sub-steps. First, the encapsulated outbound service packet forwarded by the service component is received. After receiving the outbound service packet from the second switch component, the service component encapsulates the outbound service packet with a label related to the target ISP network to obtain the encapsulated outbound service packet. Second, the encapsulated outbound service packet is decapsulated to obtain the outbound service packet, and the outbound service packet is forwarded to the target ISP network according to the mapping relationship between the peers and the labels.
(3) The service packet is the inbound service packet, and step S1002 comprises following sub-steps. First, the inbound service packet is received from the ISP network, the inbound service packet carries an address of the target sub-network in the data center network. Second, the local forwarding table of the first switch component is searched for forwarding information related to the target sub-network according to the address of the target sub-network, where the local forwarding table of the first switch component records the first subset of the forwarding information of the cloud network, and the first subset of the forwarding information is maintained by the first switch component through synchronization. Third, the label related to the ISP network in the inbound service packet, which is indicated by the found forwarding information, is encapsulated into the inbound service packet, and the encapsulated inbound service packet is forwarded toward the corresponding second switch component. Thereby, the second switch component can decapsulate the encapsulated inbound service packet to obtain the inbound service packet and transmit the inbound service packet to the target sub-network.

In all embodiments of the present disclosure, the transmission scheduling method may further include step S1003: receive a routing update message sent from an ISP network accessed by the first switch component, add a new label into the routing update message, and send the routing update message carrying the added label to the routing-service node device. Thereby, the routing-service node device can transmit the routing update message carrying the added label within the routing system in the distributed system.

Hence, the first switch component is configured to schedule the transmission of the service packets in the cloud network according to the mapping relationship between the peers and the labels to achieve peer-level scheduling. Routing and forwarding are not necessary to be performed in the million-level public network to achieve high performance and flexible scheduling. A requirement on transmission scheduling of the cloud network can be satisfied.

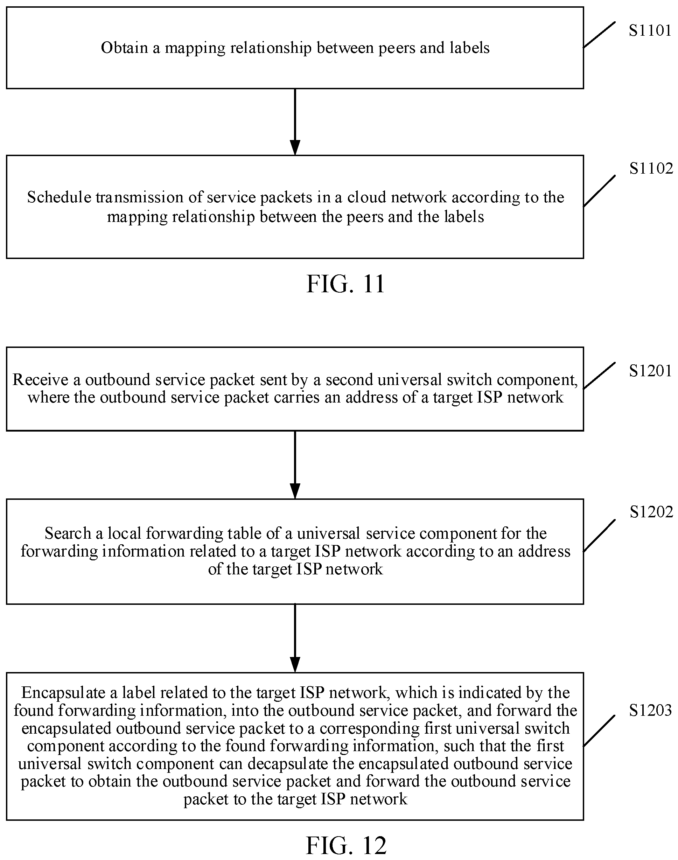

FIG. 11 is a schematic flowchart of a transmission scheduling method according to another embodiment of the present disclosure. The method is executable by the second switch component in the distributed system, and the transmission scheduling method comprises following steps S1101 to S1102.

S1101. Obtain the mapping relationship between peers and labels.

In all embodiments of the present disclosure, the second switch component may obtain the routing information from the routing system, and the routing information comprises the mapping relationship between the peers and the labels.

S1102. Schedule transmission of service packets in the cloud network according to the mapping relationship between the peers and the labels. The service packet includes the outbound service packet and the inbound service packet.
(1) When the service packet is the outbound service packet transmitted from the data center network toward the ISP network, step S1102 comprises following sub-steps. First, the outbound service packet is received from the data center network, where the outbound service packet carries the address of the target ISP network. Second, the local forwarding table of the second switch component is searched for forwarding information related to the target ISP network. The local forwarding table of the second switch component records the second subset of the forwarding information of the cloud network, and the second subset of the forwarding information is maintained by the second switch component through synchronization. Third, when the forwarding information related to the target ISP network is found, the second switch component encapsulates the label related to the target ISP network, which is indicated by the found forwarding information, into the outbound service packet, and forwards the encapsulated outbound service packet to the corresponding first switch component according to the found forwarding information. Thereby, the first switch component can decapsulate the encapsulated outbound service packet to obtain the outbound service packet, and forward the outbound service packet to the target ISP network according to the mapping relationship between the peers and the labels. Fourth, when the forwarding information related to the target ISP network is not found, the second switch component refers to its default next-hop as indicated in the local forwarding table and sends the outbound service packet to the service component that is indicated by the default next-hop. Thereby, the service component can encapsulate the outbound service packet according to the address of the target ISP network and the local forwarding table of the service component and forward the encapsulated outbound service packet to the corresponding first switch component.
(2) When service packet is the inbound service packet, step S1102 comprises following sub-steps. First. the encapsulated inbound service packet forwarded by the first switch component, where the first switch component encapsulates the label related to the ISP network in the inbound service packet to obtain the encapsulated inbound service packet. The inbound service packet carries the address of the target net in the data center network. Second, the encapsulated inbound service packet is decapsulated to obtain the inbound service packet, and the inbound service packet is forwarded to the target net according to the address of the target net.

Hence, the second switch component schedules the transmission of the service packets in the cloud network according to the mapping relationship between the peers and the labels to achieve peer-level scheduling. Routing and forwarding are not necessary to be performed in the million-level public network to achieve high performance and flexible scheduling. A requirement on transmission scheduling of the cloud network can be satisfied.

FIG. 12 is a schematic flowchart of a transmission scheduling method according to another embodiment of the present disclosure. The transmission scheduling method is executable by the service component in the distributed system, and the transmission scheduling method comprises following steps S1201 to S1203.

S1201. Receive the outbound service packet sent by the second switch component. The outbound service packet is a service packet transmitted from the data center network to the ISP network. The outbound service packet carries the address of the target ISP network.

S1202. Search the local forwarding table of the service component for the forwarding information related to the target ISP network according to the address of the target ISP network. The local forwarding table of the service component records the full set of the forwarding information of the cloud network.

S1203. Encapsulate the label related to the target ISP network, which is indicated by the found forwarding information, into the outbound service packet, and forward the encapsulated outbound service packet to the corresponding first switch component according to the found forwarding information. Thereby, the first switch component can decapsulate the encapsulated outbound service packet to obtain the outbound service packet and forward the outbound service packet to the target ISP network.

In all embodiments of the present disclosure, a flow classification rule and a schedule table may be configured in the service component. The flow classification rule defines a manner of classifying the service packet, and each schedule table is configured to record information for transmitting the service packets of a respective category. The transmission scheduling method further includes step S 1024: classify the service packet in the cloud network according to the flow classification rule to obtain a category to which the service packet belongs; and schedule the transmission of the service packet according to the recorded information in the schedule table for the category.

Hence, the service component schedules the transmission of the service packet in the cloud network according to the mapping relationship between the peers and the labels, to achieve peer-level scheduling. Routing and forwarding are not necessary to be performed in the million-level public network to achieve high performance and flexible scheduling. A requirement on transmission scheduling of the cloud network can be satisfied. In addition, the service component deployed with the flow classification rule and the schedule table can implement refined scheduling on a basis of objects and services.

All or some of the procedures of the method in the foregoing embodiments may be implemented by a computer program instructing relevant hardware. The program may be stored in a computer-readable storage medium. When the program is executed, the procedures of the foregoing method embodiments may be implemented. The storage medium may be a magnetic disk, an optical disc, a read-only memory (ROM), a random access memory (RAM), or the like.

What is disclosed above is merely embodiments of the present disclosure and is not intended to limit the protection scope of the present disclosure. Therefore, equivalent variations made in accordance with the claims of the present disclosure shall fall within the scope of the present disclosure.

## Claims

1. A distributed system in a cloud network, wherein:
the cloud network comprises an access network, a backbone network, and a data center network;
node devices of the distributed system comprise one or more first routing node devices, one or more second routing node devices, and a routing-service node device;
the one or more first routing node devices, the one or more second routing node devices, and the routing-service node device are connected to the backbone network;
the one or more first routing node devices are deployed within the access network and are configured to access one or more internet service provider networks, and each first routing node device comprises a service component and a first switch component;
the one or more second routing node devices are deployed in the data center network and are configured to provide data interconnection among one or more sub-networks in the data center network, the second routing node device comprises a second switch component;
the routing-service node device is deployed outside of the access network and the data center network; and
a mapping relationship between peer connections and scheduling labels is maintained in the distributed system, each peer connection is established between the first switch component of one of the one or more first routing node devices and one of the one or more internet service provider networks, the scheduling label is a label allocated to the respective peer connection for identifying the respective peer connection when scheduling transmission of service packets, the mapping relationship is shared among the node devices of the distributed system, and the node devices in the distributed system are configured to schedule transmission of service packets in the cloud network according to the mapping relationship.

2. The distributed system according to claim 1, wherein:
the access network comprises a plurality of points of presence, and a quantity of first routing node devices deployed at each point of presence is at least one; and
in each of the at least one first routing node device, a quantity of the first switch component is one, a quantity of the service component is one, and both the first switch component and the service component are connected to the backbone network;
the first switch component is configured to: access the one or more internet service provider networks, establish the respective peer connection for each accessed internet service provider network through a border gateway protocol, and allocate the respective scheduling label to each peer connection; and
the service component is configured to schedule transmission of the service packets in the cloud network according to the mapping relationship;
each peer connection is a communication connection established between the respective first switch component and the respective internet service provider network which are connected, and each peer connection is mapped to the respective scheduling label in the mapping relationship; and
the first switch component comprises an edge access switch, and the service component comprises an elastic packet processing server.

3. The distributed system according to claim 1 or 2, wherein:
the data center network comprises a plurality of availability zones, each availability zone comprises one or more sub-networks, and a quantity of second routing node devices deployed at each availability zone is at least one;
in each of the at least one second routing node device, a quantity of the second switch component is at least one, and the at least one second switch component is connected to the backbone network;
each second switch component is configured to access the one or more sub-networks belonging to the same availability zone as said second switch component and is configured to provide data interconnection among the one or more sub-networks belonging to the same availability zone as said second switch component; and
the second switch component comprises an internal aggregate switch.

4. The distributed system according to any one of claims 1 to 3, wherein:
the routing-service node device comprises an elastic routing service server, and a routing-service program is deployed in the elastic routing service server; and
the routing-service program in the elastic routing service server is deployed in a physical manner or a virtual machine.

5. The distributed system according to any one of claims 1 to 4, wherein:
routing instances are deployed in each service component, each first switch component, and each second switch component;
the distributed system comprises a routing system, and the routing system comprises the routing-service node device and the routing instances; and
the node devices of the distributed system exchange routing information of the cloud network through the routing system, and the routing information carries the mapping relationship.

6. The distributed system according to any one of claims 1 to 5, wherein:
the routing-service node device is configured to collect the routing information of the cloud network, and transmits the routing information of the cloud network to all components, in which the routing instances are deployed, in the routing system;
the routing-service node device is further configured to transmit updated routing information to the components when the routing information of the cloud network is updated;
the routing-service node device and the components are configured to store a full set of the routing information of the cloud network through transmitting the routing information and the transmitting the updated routing information; and
in the full set of the routing information, routing information required for transmitting the service packets toward each peer connection carries the respective scheduling label mapped to said peer connection.

7. The distributed system according to any one of claims 1 to 6, wherein:
the distributed system comprises a forwarding system, and the forwarding system comprises a forwarding plane of each service component, a forwarding plane of each first switch component, and a forwarding plane of each second switch component;
the service component, the first switch component, and the second switch component belong to components in the forwarding system; and
the node devices of the distributed system are configured to transmission scheduling on the service packet in the cloud network based on the mapping relationship in the forwarding system.

8. The distributed system according to any one of claims 1 to 7, wherein:
each service component, each first switch component, and each second switch component store the full set of the routing information of the cloud network;
in the full set of the routing information, routing information required for transmitting data packets toward each peer connection carries the respective scheduling label mapped to said peer connection;
each service component is configured to synchronize a full set of forwarding information of the cloud network according to the full set of the routing information through the forwarding plane of said service component;
each first switch component is configured to synchronize a respective first subset of the forwarding information of the cloud network according to the full set of the routing information through the forwarding plane of said first switch component, wherein the first subset of the forwarding information comprises the forwarding information required for transmitting the data packets toward the one or more internet service provider networks accessed by said first switch component;
each second switch component is configured to synchronize a respective second subset of the forwarding information of the cloud network according to the full set of the routing information through the forwarding plane of said second switch component, wherein the second subset of forwarding information comprises the forwarding information required for transmitting the data packets the one or more sub-networks belonging to the same availability zone as said second switch component.

9. The distributed system according to any one of claims 1 to 8, wherein:
the full set of forwarding information synchronized by each service component is stored in a local forwarding table of said service component;
the first subset of the forwarding information synchronized by each first switch component is stored in a local forwarding table of the first switch component;
the second subset of the forwarding information synchronized by the second switch component is stored in a local forwarding table of the second switch component; and
each service component, each first switch component, and each second switch component are configured to schedule the transmission of the service packets according to the forwarding information stored in the respective local forwarding table.

10. The distributed system according to any one of claims 1 to 9, wherein the transmission scheduling comprises, for each service component, each first switch component, and each second switch component:
searching, when receiving a service packet in the forwarding system, the local forwarding table for forwarding information required for transmitting the service packet;
in response to the forwarding information required for transmitting the service packet being found, encapsulating the scheduling label in the found forwarding information into the service packet, and forwarding the service packet according to content of the found forwarding information; and
in response to the forwarding information required for transmitting the service packet being not found, forwarding the service packet to a component indicated by a default next-hop to enable the component indicated by a default next-hop to schedule the transmission of the service packet.

11. The distributed system according to any one of claims 1 to 10, wherein;
a flow classification rule and one or more schedule tables are configured in each service component, the flow classification rule defines a manner of classifying the service packet, and each schedule table is configured to record information for transmitting the service packets of a respective category; and
the service component is configured to:
classify the service packet in the cloud network according to the flow classification rule to obtain a category to which the service packet belongs; and
schedule the transmission of the service packet according to the recorded information in the schedule table for the category.

12. A transmission scheduling method, performed by the distributed system according to any of claims 1 to 11, the method comprising:
obtaining the mapping relationship between the peer connections and the scheduling labels;
sharing the mapping relationship among the node devices of the distributed system; and
scheduling the transmission of the service packets in the cloud network according to the mapping relationship.

13. The method according to claim 12, wherein:
the service packets in the cloud network comprise an outbound service packet that is transmitted from the data center network toward a target internet service provider network, and the outbound service packet carries an address of the internet service provider network; and
scheduling the transmission of the service packets in the cloud network according to the mapping relationship comprises:
receiving, by the second switch component, the outbound service packet from the data center network;
searching, by the second switch component using the address of the target internet service provider network, a local forwarding table of the second switch component for forwarding information required for transmitting service packets to the target internet service provider network, wherein the local forwarding table of the second switch component records a second subset of forwarding information of the cloud network, and the second subset of the forwarding information is maintained by the second switch component through synchronization; and
in response to the forwarding information required for transmitting service packets to the target internet service provider network being found,
encapsulating, by the second switch component, the scheduling label indicated in the found forwarding information into the outbound service packet, wherein the scheduling label is of the peer connection connecting the target internet service provider network;
forwarding, by the second switch component, the outbound service packet encapsulated with the scheduling label toward the first switch component according to the found forwarding information; and
decapsulating, by the first switch component, the outbound service packet forwarded by the second switch component to obtain the scheduling label;
forwarding the decapsulated outbound service packet to the target internet service provider network according to the mapping relationship and the scheduling label.

14. The method according to claim 12 or 13, further comprising, in response to the forwarding information required for transmitting service packets to the target internet service provider network being not found:
forwarding, by the second switch component, the outbound service packet to the service component, wherein the service component is indicated by a default next-hop of the second switch component;
searching, by the service component using the address of the target internet service provider network, a local forwarding table of the service component for the forwarding information required for transmitting service packets to the target internet service provider network, wherein the local forwarding table records a full subset of the forwarding information of the cloud network;
encapsulating, by the service component, the scheduling label indicated in the forwarding information found by the service component into the outbound service packet;
forwarding, by the service component, the outbound service packet encapsulated with the scheduling label toward the first switch component according to the forwarding information found by the service;
decapsulating, by the first switch component, the outbound service packet forwarded by the service component to obtain the scheduling label;
forwarding, by the first switch component, the decapsulated outbound service packet to the target internet service provider network according to the mapping relationship and the scheduling label.

15. The method according to any one of claims 12 to 14, wherein:
the service packets in the cloud network comprise an inbound service packet transmitted from the internet service provider network toward the data center network, and the inbound service packet carries an address of a target sub-network in the data center network; and
scheduling the transmission of the service packets in the cloud network according to the mapping relationship comprises:
receiving, by the first switch component, the inbound service packet from the internet service provider network;
searching, by the first switch component using the address of the target sub-network, a local forwarding table of the first switch component for forwarding information required for transmitting service packets to the target sub-network, wherein the local forwarding table of the first switch component records a first subset of forwarding information of the cloud network, and the first subset of the forwarding information is maintained by the first switch component through synchronization;
encapsulating, by the first switch component, a scheduling label indicated in the found forwarding information into the inbound service packet;
forwarding, by the first switch component, the inbound service packet encapsulated with the scheduling label to the second switch component;
decapsulating, by the second switch component, the inbound service packet forwarded by the first switch component; and
forwarding, by the second switch component, the decapsulated inbound service packet to the target sub-network.

16. A computer-readable storage medium, having a computer program stored therein, the computer program, when executed by a processor, implementing the transmission scheduling method according to any one of claims 12 to 15.
